# FASCICULE DE BREVET EUROPEEN

(11) **EP 0 998 807 B1**
(45) Date de publication et mention de la délivrance du brevet: **09.10.2002**
(21) Numéro de dépôt: 98940302.7
(22) Date de dépôt: 21.07.1998
(51) Int. Cl.: H04L 29/06

(54) **PROCEDE ET DISPOSITIF DE RECEPTION DE MESSAGES NUMERIQUES**
VERFAHREN UND VORRICHTUNG ZUM DIGITALEN NACHRICHTENEMPFANG
METHOD AND DEVICE FOR RECEIVING DIGITAL MESSAGES

(30) Priorité: 22.07.1997 FR 9709288
(43) Date de publication de la demande: 10.05.2000
(73) Titulaire: THALES AVIONICS S.A., 78141 Vélizy Villacoublay Cédex (FR)
(72) Inventeur: PITOT, Christian Thomson-CSF Propriété Intellec., F-94117 Arcueil Cedex (FR); GUEDOU, Philippe Thomson-CSF Propriété Intellec., F-94117 Arcueil Cedex (FR)
(74) Mandataire: Beylot, Jacques
(86) Numéro de dépôt international: FR9801609
(87) Numéro de publication internationale: WO99005837

(56) Documents cités:
- EP-A- 0 666 200
- EP-A- 0 675 024
- FR-A- 2 724 742
- US-A- 4 482 951
- US-A- 5 444 643

## Description

La présente invention concerne un procédé et un dispositif pour la réception de messages numériques comportant un label ou une étiquette destiné notamment à fournir une information sur le contenu utile du message, cette étiquette pouvant également être utilisée pour l'acheminement du message, ou son traitement.

Elle s'applique notamment, mais non exclusivement, aux transmissions numériques par bus numériques tels que ceux que l'on trouve à bord des aérodynes pour interconnecter les différents équipements électroniques de bord. Pour garantir l'intégrité des données au cours de leur transmission par l'intermédiaire d'un bus numérique et leur acheminement vers la bonne destination ainsi qu'un minimum de débit pour la transmission, il est nécessaire de traduire les données en signaux ayant des caractéristiques physiques adaptées au support de transmission utilisé, de les ordonner les unes par rapport aux autres, généralement au sein d'une trame, sous forme de messages, afin d'éviter les collisions et de les accompagner d'étiquettes d'adressage permettant à un équipement recevant un message de déterminer la nature de l'information utile contenue dans le message et ainsi, décider de la traiter ou non.

Pour réaliser les mises en forme des données lors de leur insertion et lors de leur extraction d'un bus de transmission, un équipement comporte des circuits d'interface d'accès au bus. Ces circuits d'interface d'accès au bus ont leurs spécifications propres qui dépendent du type de bus utilisé et nécessitent que les équipements raccordés leur soient compatibles. Cette compatibilité implique de la part des équipements, qu'ils réalisent une mise en forme préalable des données avant de les échanger avec les circuits d'interface d'accès au bus.

Cette mise en forme préalable à l'inconvénient de dépendre du type de bus si bien qu'un équipement doit être conçu en fonction du type de bus de transmission de données auquel il est destiné à être raccordé.

Pour éviter de particulariser un équipement, dès sa conception, en fonction du type de bus de données auquel il est destiné à être raccordé, il a été proposé dans le brevet américain US 5,444,643 de compléter les circuits d'interface d'accès à un bus de transmission, par un circuit auxiliaire spécialisé transformant les différentes sortes de mises en forme des données exigées par les divers circuits possibles d'interface d'accès à un bus en une mise en forme des données unique et indépendante du type de bus. Grâce à l'utilisation de ce circuit auxiliaire spécialisé intercalé entre un équipement et un circuit d'interface d'accès au bus, l'équipement n'est plus particularisé en fonction du type de bus de transmission utilisé et convient donc pour différents types de bus.

Cette solution qui permet d'améliorer l'universalité d'un équipement en reportant les problèmes posés par son adaptation au circuit d'interface d'accès à un bus de transmission, sur un circuit auxiliaire spécialisé a cependant l'inconvénient de ne pas permettre de soulager un équipement d'un certain nombre de prétraitements à effectuer sur les messages reçus pour en extraire des informations utiles. En effet, le circuit auxiliaire spécialisé, réalisé à base d'un processeur commandé par un logiciel en mémoire ROM, n'est pas facilement reconfigurable de sorte qu'il n'est pas façile de particulariser les opérations qu'il effectue sur les messages reçus en fonction du genre d'équipement raccordé. En conséquence, les opérations de formatage des messages reçus pour en extraire l'information utile à un équipement, qui sont très dépendantes du genre d'équipement, restent à la charge de l'équipement lui-même alors qu'elles sont d'une nature très voisine de celles des opérations exécutées par les circuits d'interface d'accès à un bus et par les circuits auxiliaires spécialisés.

La présente invention a pour but de supprimer ces inconvénients.

Elle a pour objet un procédé pour la réception et le prétraitement de messages numériques, en vue de leur utilisation par un processeur de traitement à qui les messages sont destinés, chaque message comprenant des informations utiles et une étiquette d'identification de ces informations utiles permettant de calculer l'adresse, dans une mémoire, d'un descripteur comprenant des informations relatives aux traitements à appliquer au message ainsi que des informations définissant une adresse en mémoire d'une zone à structure prédéfinie destinée au stockage du message considéré.

Ce procédé met en oeuvre, lors de la réception d'un message, la lecture de l'étiquette du message reçu, le calcul de l'adresse du descripteur obtenue à l'aide de l'étiquette, la lecture en mémoire du descripteur à l'adresse ainsi calculée, et l'exécution sur le message des traitements indiqués par le descripteur.

Ce procédé est caractérisé en ce que la zone mémoire à structure prédéfinie adressée par un descripteur renferme, en plus d'un emplacement destiné au message, un emplacement destiné à un code de formatage définissant un traitement de formatage à appliquer aux informations contenues dans le message considéré pour les mettre sous une forme directement utilisable par le processeur de traitement.

Le traitement de formatage peut être soit booléen, soit binaire. Lorsqu'il est booléen, il consiste à convertir chacun des bits du message indiqués par le code de formatage en une variable booléenne qui est stockée à la suite du message dans la zone mémoire à structure prédéfinie. Lorsqu'il est binaire, il consiste à masquer à certaines valeurs indiquées par le code de formatage les bits de poids faible et fort à partir de rangs respectifs indiqués par le code de formatage, et à cadrer le mot ainsi obtenu à l'aide d'une information de cadrage également fournie par le code de formatage.

Grâce à ces dispositions, les opérations de prétraitement et de formatage des messages reçus ont des définitions configurables et pouvant être modifiées en chargeant, à l'adresse correspondant à l'étiquette du message, un nouveau descripteur et/ou en changeant le code de formatage de la zone mémoire associée à structure prédéfinie.

Dans le cas où un processeur de traitement est relié à une pluralité de voies de transmission de messages numériques, le procédé selon l'invention comprend en outre, l'association de chaque voie de transmission à un registre de contrôle de voie indiquant l'adresse de la zone où se trouvent les descripteurs des messages susceptibles d'être transmis par cette voie, ainsi que des paramètres généraux de définition des prétraitements à appliquer à ces messages, les registres de contrôle de voie étant stockés en mémoire à des adresses respectives prédéfinies, la réception d'un message par une voie déclenchant la lecture du registre de contrôle de la voie, et le calcul de l'adresse du descripteur du message à l'aide de l'étiquette du message et de l'adresse de la zone des descripteurs des messages, lue dans le registre de contrôle de la voie.

L'invention propose également un dispositif pour la mise en oeuvre du procédé selon l'invention, ce dispositif comprenant un automate séquenceur conçu pour exécuter les opérations de prétraitement et de formatage sur les messages reçus en tenant compte des paramètres de prétraitement indiqués par les descripteurs correspondants et des codes de formatage présents dans les zones mémoire à structure prédéfinie repérées par les descripteurs.

Un mode de réalisation du dispositif selon l'invention sera décrit ci-après, à titre d'exemple non limitatif, avec référence aux dessins annexés dans lesquels :
La figure 1 représente schématiquement un calculateur comprenant un dispositif de réception de messages selon l'invention connecté à un bus de transmission de données numériques ;
La figure 2 est une représentation schématique détaillée du dispositif de réception montré sur la figure 1 ;
La figure 3 montre le format des messages reçus conformément à la norme ARINC 429;
La figure 4 montre le format du contenu d'un registre de contrôle de voie de transmission appartenant au dispositif montré sur la figure 2;
La figure 5 montre le format d'un descripteur de message conformément au procédé selon l'invention ;
Les figures 6a et 6b montrent le format de codes de formatage utilisés pour le formatage des informations contenues dans les messages reçus ;
La figure 7 montre le format d'un bloc de réception dans lequel sont inscrits le message reçu et les informations extraites du message et formatées ;

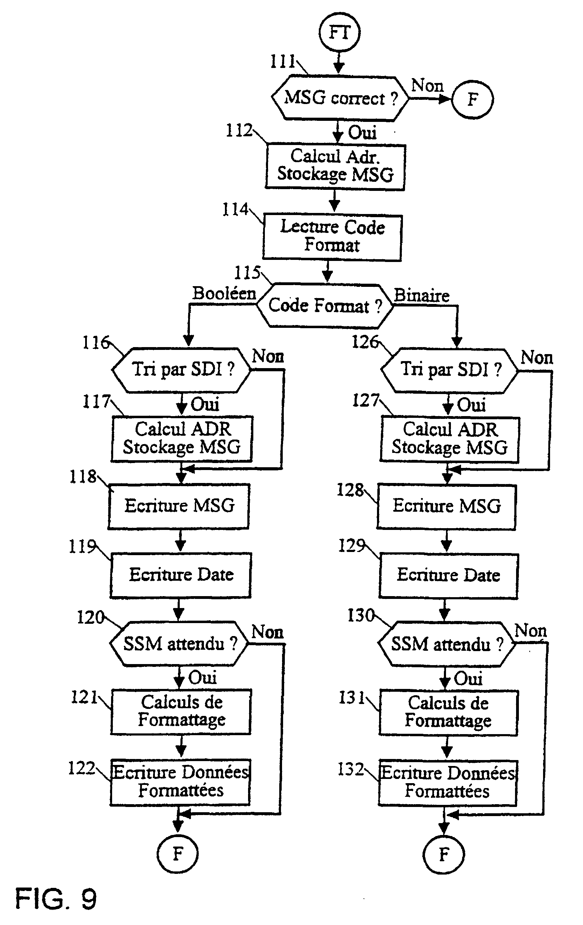

Les figures 8 et 9 représentent sous la forme d'organigrammes l'algorithme exécuté par le dispositif de réception montré sur la figure 2, conformément au procédé selon l'invention.

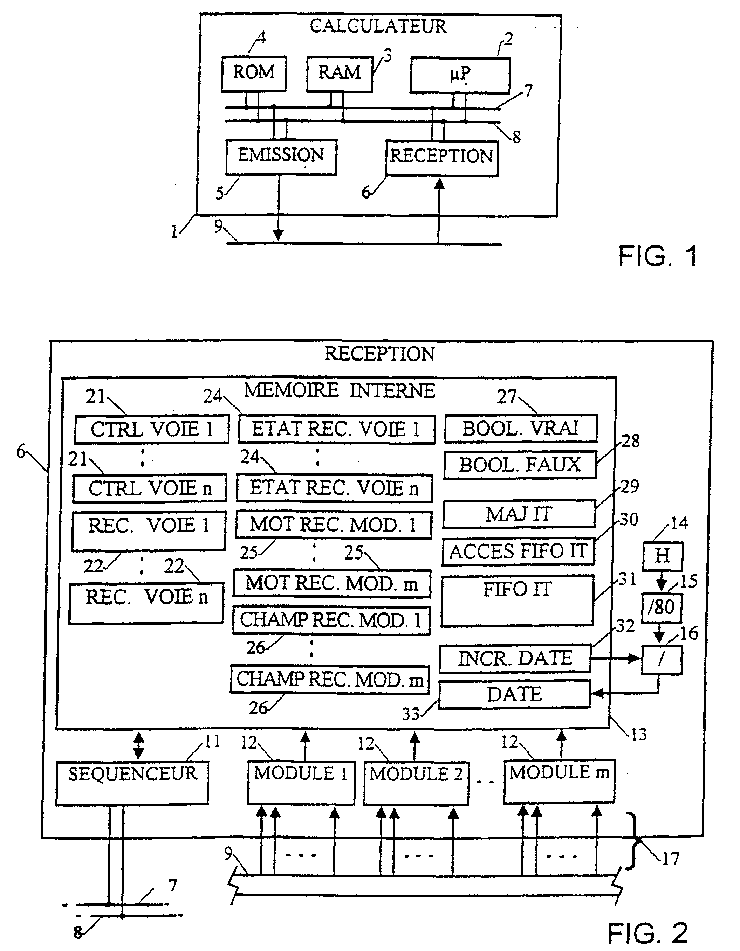

La figure 1 représente un calculateur 1 comprenant un microprocesseur 2 connecté par l'intermédiaire d'un bus d'adressage 7 et d'un bus de données 8 à :
- une mémoire de travail volatile 3, par exemple de type RAM,
- une mémoire non volatile 4 dans laquelle est stocké notamment le programme exécuté par le microprocesseur 2,
- un dispositif d'émission 5 pour émettre des données transmises par le microprocesseur 2 sur un bus externe 9 comprenant n voies de transmission, et
- un dispositif de réception 6 pour transmettre les données circulant sur les voies du bus 9 au microprocesseur 2, conformément au procédé selon l'invention.

Ainsi, le microprocesseur 2 peut communiquer avec d'autres équipements par l'intermédiaire du bus 9.

Sur la figure 2, le dispositif de réception 6 comprend un automate séquenceur 11 raccordé aux bus d'adressage 7 et de données 8 du microprocesseur 2. Le séquenceur 11 est également connecté au bus 9 par l'intermédiaire de m modules de réception 12. A titre d'exemple, le bus 9 regroupe 48 voies de transmission 17, de type ARINC 429, chaque module de réception 12 au nombre de 6, assurant la réception de messages provenant de 8 voies.

Par ailleurs, le dispositif de réception 6 comprend une mémoire interne 13 contenant des registres de travail utilisés par le séquenceur 11. En particulier, cette mémoire interne 13 comprend, par voie de transmission 17 :
- un registre de contrôle de voie 21,
- un registre de réception de voie 22 comprenant deux champs utilisés en alternance, à savoir un premier permettant le stockage du dernier message complet reçu par le module de réception 12 correspondant à la voie, et un second champ dans lequel le message suivant provenant de la même voie est en cours de chargement bit à bit par le module, et
- un registre d'état 24 des voies permettant au module correspondant à la voie de stocker le contexte des anomalies de transmission, comme les anomalies de gabarit.

Cette mémoire 13 comprend également pour chaque module de réception 12 :
- un registre 25 dans lesquels les voies ayant un message disponible sont signalées par un bit à 1, la correspondance numéro de bit / voie se faisant par exemple dans l'ordre croissant du poids des bits et des numéros de voies du module, et
- un registre 26 indiquant, pour chaque voie contrôlée par le module, dans quel champ du registre de réception 22 se trouve le dernier message complet reçu.

Pour permettre la datation de la réception des messages, le dispositif de réception 6 comprend une horloge 14 dont la sortie est connectée à un premier diviseur de fréquence 15 par 80, puis à un second diviseur de fréquence 16 par une valeur fournie par un registre d'incrément de date 32, la sortie du second diviseur 16 étant envoyée dans un registre 33 contenant en permanence la date courante.

La mémoire interne 13 contient également une file d'attente d'interruption 31, par exemple gérée en mode FIFO ("First In First Out"), dans laquelle sont empilées les données caractéristiques des situations pour lesquelles une interruption est générée, de manière à permettre leur traitement par le microprocesseur 2. Toutefois, le contenu de cette file d'attente n'est pas accessible de l'extérieur du dispositif de réception 6, mais peut être lue de manière indirecte par l'intermédiaire d'un registre d'accès 30. Pour effectuer une nouvelle lecture de la file d'attente et donc une mise à jour du contenu du registre 30, il suffit d'écrire dans un registre de requête de dépilement 29 un mot ayant le bit de poids faible à 1. La mise à jour du registre 30 est effectuée lorsque le bit de poids faible du registre 29 est à 0. Ces dispositions permettent de retirer de la file les interruptions qui sont prises en compte par le microprocesseur 2. Par ailleurs, l'accès à la file d'attente 31 en écriture est également possible par une écriture dans le registre 30.

Pour effectuer des opérations de formatage de variables booléennes transmises dans les messages reçus, la mémoire 13 contient également deux registres 27, 28 définissant de manière paramétrable respectivement la valeur du booléen "VRAI", et celle du booléen "FAUX".

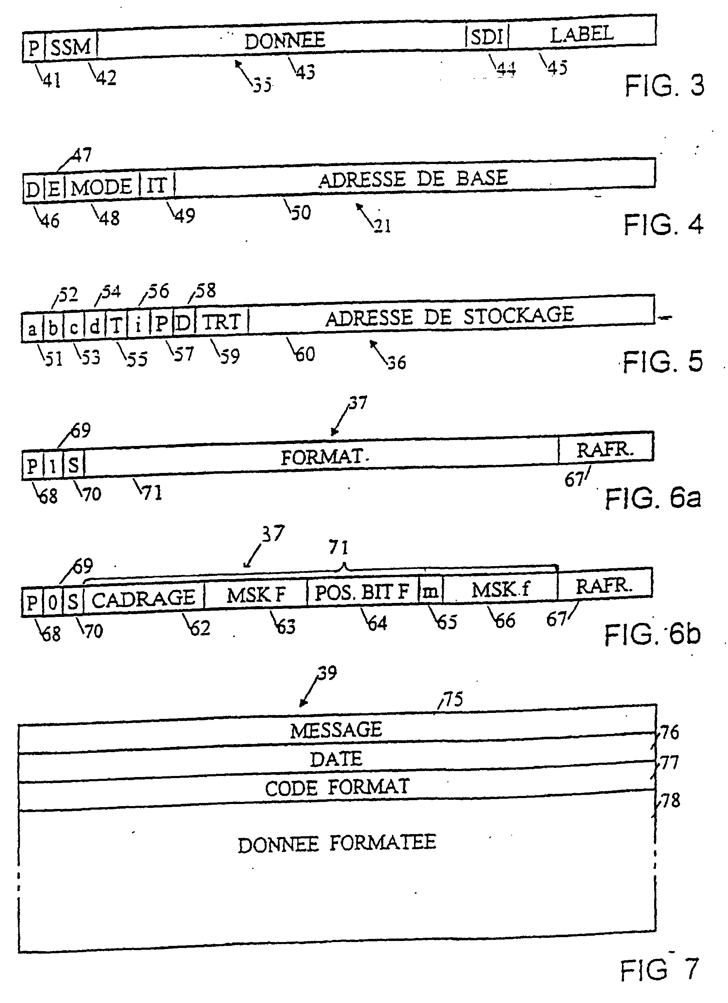

Le dispositif de réception 6 peut par exemple être conçu pour recevoir des messages selon la norme ARINC 429. Tel que représenté sur la figure 3, les messages 35 de ce type comprennent sur 32 bits, un champ de label ou étiquette 45 permettant d'identifier le message, un champ de données 43 contenant l'information utile du message, un champ P 41 pouvant être utilisé pour que la parité du message soit impaire, un champ SSM 42 parfois utilisé pour indiquer que la donnée est invalide, et un champ SDI 44 qui peut être utilisé comme une extension du champ label 45.

Les modules de réception 12 assurent notamment la démodulation et la conversion série / parallèle des messages reçu, avec contrôle de gabarit des signaux de transmission. Au fur et à mesure des réceptions, ils mettent à jour les registres 22, 24, 25 et 26, et génèrent éventuellement des interruptions en écrivant le contexte de l'interruption dans la file d'attente 31 par l'intermédiaire du registre 30.

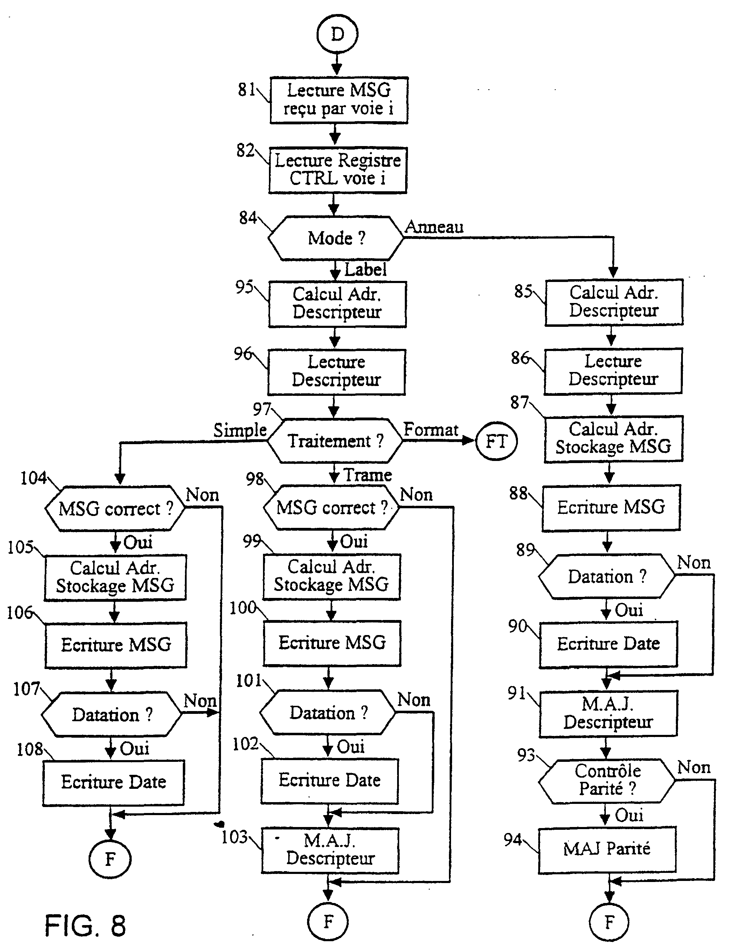

Lorsqu'un message reçu est stocké dans un registre 22, l'automate séquenceur 11 prend le relais pour effectuer des traitements plus évolués sur le message. A cet effet le séquenceur exécute l'algorithme représenté sur la figure 8. Il commence tout d'abord (à l'étape 81) par lire les registres 24 et 25 qui indiquent les voies ayant transmis un message valide. Pour chaque message valide reçu, il lit le registre 26 pour déterminer où se trouve le message dans le registre 22 correspondant à la voie ayant transmis le message, puis il lit le message. Pour pouvoir déterminer le traitement à appliquer au message, il faut tout d'abord lire le registre de contrôle 21 associé à la voie (étape 82). Tel que représenté sur la figure 4, ce registre comprend :
- un champ 50 donnant l'adresse de la zone mémoire située par exemple dans les mémoires 3 ou 4, où se trouvent les descripteurs, c'est-à-dire, les paramètres décrivant les traitements à appliquer respectivement aux messages transmis par la voie,
- un champ IT 49 permettant d'autoriser ou non la génération d'interruptions à la suite d'événements autres que des erreurs,
- un champ MODE 48 indiquant un mode de stockage des messages transmis par la voie,
- un champ E 47 permettant d'autoriser ou non la génération d'interruptions à la suite d'erreurs de format ou de parité, et
- un champ D 46 indiquant le format (sur 8 bits ou sur 32 bits) des dates à associer aux messages reçus pour leur datation.

La lecture du registre de contrôle 21 associé à la voie de réception en cours permet de déterminer notamment le mode de stockage du message, à savoir soit en mode anneau selon lequel le message, quelle que soit son étiquette, est stocké dans une file d'attente dans la mémoire 3, dont l'adresse est définie par le numéro de voie, soit en mode label selon lequel le message est stocké et traité en fonction de son label 45 (étape 84).

Un anneau est une zone de stockage d'une taille prédéterminée, divisée en deux blocs de tailles égales, dans laquelle sont stockés les messages au fur et à mesure de leur arrivée.

En mode anneau, à l'étape 85, le séquenceur 11 détermine l'adresse dans la mémoire 3 du descripteur associé au message en combinant le champ adresse de base 50 fourni par le registre de contrôle 21 de la voie par laquelle le message a été reçu, et le numéro de voie, et lit le descripteur à l'adresse ainsi déterminée (étape 86).

Tel que représenté sur la figure 5, un descripteur 36 est un mot comportant
- un champ 60 permettant de définir l'adresse de stockage du message 35 dans la mémoire 3,
- un champ TRT 59 contenant un code de traitement à appliquer au message,
- un champ D 58 indiquant si le séquenceur 11 doit ou non dater chaque message,
- un champ P 57 indiquant si le séquenceur 11 doit ou non contrôler la parité de chaque message,
- un champ i 56 indiquant si le séquenceur 11 doit déclencher une interruption dans certaines conditions, par exemple, en mode anneau, à chaque arrivée de message ou lorsqu'un bloc de la zone de stockage est plein,
- un champ T 55 indiquant si le séquenceur 11 doit ou non trier les messages en fonction du contenu de leur champ SDI 44, et
- quatre champs 51 à 54 indiquant les valeurs des champs SSM 42 des messages 35 que le séquenceur 11 doit rejeter.
   En mode anneau, le champ adresse de stockage 60 du descripteur 36 est divisé en deux parties, à savoir une partie de poids fort contenant l'adresse de la zone de stockage et une partie de poids faible qui est incrémentée à chaque écriture de message. Dans le mode anneau, le champ TRT 59 a une valeur fixe.

A l'étape 87, le séquenceur 11 calcule l'adresse de stockage du message 35 à l'aide de l'adresse de stockage fournie par le descripteur 36 lu à l'étape précédente, et écrit le message à l'adresse ainsi calculée (étape 88).
Si la valeur du champ D 58 du descripteur indique qu'il faut dater le message (étape 89), il effectue une lecture du registre 33 donnant la date courante et écrit la valeur lue à l'adresse qui suit celle où a été écrit le message (étape 90). A l'étape suivante 91, il met à jour la partie de poids faible du champ adresse de stockage 60 du descripteur, de manière à repérer l'adresse qui suit le dernier mot qu'il vient d'écrire, c'est-à-dire en l'incrémentant de 2 ou de 1 selon qu'il a ou non daté le message. A l'étape 93, si la valeur du champ P 57 indique qu'il faut contrôler la parité du message, il vérifie cette parité à partir des bits du message et met à jour le bit P 41 du message stocké (étape 94), de manière à indiquer s'il a trouvé la parité correcte ou non.

Lorsqu'un bloc de l'anneau a été complètement rempli, la partie de poids faible du champ 60 étant passée par incrémentation binaire d'une valeur maximum à une valeur minimum, le bit de poids faible du champ 50 du registre de contrôle 21 est inversé de manière à pointer sur un autre descripteur 36 et donc un autre bloc de stockage.

En mode label, le séquenceur 11 effectue également le calcul de l'adresse et la lecture du descripteur 36 associé au message 35 (étapes 95 et 96). Dans ce mode, l'adresse du descripteur est obtenue en concaténant l'adresse de base fournie par le champ 50 du registre de contrôle 21 correspondant à la voie par où le message a été transmis, avec la valeur du champ label 45, lue dans le message.
Dans ce mode, plusieurs traitements différents peuvent être indiqués par le champ TRT 59 du descripteur 36 (étape 97), à savoir un traitement de type simple selon lequel le message doit être simplement inscrit à l'adresse de stockage indiquée par le descripteur, un traitement de type trame, selon lequel tous les messages 35 ayant le même label doivent être inscrits dans une file d'attente dans la mémoire 3, et un traitement de type formaté, dans lequel le message 35 subit en outre des traitements de formatage.

Dans le traitement simple, à l'étape 104, le séquenceur 11 détermine si le message doit être rejeté. Ceci est le cas si le champ P 57 du descripteur 36 indique qu'il faut tester la parité et que la parité du message est incorrecte, ou si les champs 51 à 54 du descripteur indiquent qu'il faut rejeter les messages dont le champ SSM 42 a certaines valeurs et si ce champ dans le message a effectivement l'une de ces valeurs.
Si le message 35 est rejeté et si le champ E 47 du registre de contrôle 21 l'autorise, l'automate génère une interruption d'erreur dans la file 31.

Si le message n'est pas rejeté, le séquenceur 11 calcule l'adresse de stockage du message en concaténant l'adresse de base 50 fournie par le registre de contrôle 21 associé à la voie de réception du message, le champ label 45 du message, et si le champ T 55 du descripteur 36 du message l'indique, le champ SDI 44 (étape 105). Si le message doit être trié suivant la valeur de son champ SDI 44, l'adresse de stockage du message doit aussi prendre en compte le champ D 58 du descripteur s'il indique que le message doit être daté, et le champ D 46 du registre de contrôle 21 s'il indique que les messages doivent être datés sur un mot de 32 bits.

Le séquenceur 11 procède ensuite à l'écriture du message à l'adresse ainsi calculée (étape 106).
Si le message doit être daté (étapes 107 et 108) sur 8 bits, les 8 bits de poids faible du registre 33 remplacent le champ label 45 dans le message stocké. Par contre, si le message doit être daté sur 32 bits, la totalité de la valeur du registre 33 est inscrite en mémoire 3 à l'adresse qui suit celle qui a été calculée à l'étape 105.

Si le champ i 56 l'indique, le séquenceur 11 génère une interruption dans la file 31 pour indiquer au microprocesseur 2 qu'un message du type qui vient d'être traité a été reçu, ceci à condition que cette génération soit validée par le champ 49 du registre de contrôle 21.

Comme pour le traitement simple, le traitement trame se déroule d'une manière analogue de l'étape 98 à l'étape 102. Une différence réside toutefois dans le calcul de l'adresse de stockage du message dans la mémoire 3, car d'une part, dans ce mode, le tri par SDI (champ 44 du message) n'est pas possible, et d'autre part, l'adresse de stockage 60 dans le descripteur 36 du message doit être mis à jour à la suite de l'écriture du message et éventuellement de la date (étape 103).

Les premières étapes 111 et 112 du traitement formaté sont analogues aux étapes 104, 105 et 98, 99 des autres traitements. Toutefois, dans ce traitement, le message est stocké dans un bloc 39 de données chargées dans la mémoire 3 lors de l'initialisation du système, ce bloc ayant une structure particulière comme celle montrée sur la figure 7.
Ce bloc comprend :
- une zone 75 destinée à recevoir le message tel qu'il a été reçu,
- une zone 76 destinée à recevoir la date de péremption de la donnée, cette date étant calculée en faisant la somme de la date de réception du message et d'une constante sur 8 bits représentant la contrainte de rafraîchissement ou durée de validité du message,
- une zone 77 contenant un code de format préchargé lors de l'initialisation de la mémoire 3 et définissant les opérations de formatage du message ainsi que la constante de contrainte de rafraîchissement, et
- une zone 78 de un ou plusieurs mots, destinée à recevoir les données formatées.

La figure 6a montre la structure générale du code de format. Sur cette figure, le code de format 37 comprend :
- un champ 67 donnant la valeur de la contrainte de rafraîchissement,
- un champ 71 définissant les paramètres du formatage,
- un champ 70 précisant si en cas de tri par SDI, le code format dépend de la valeur du champ SDI 44 du message reçu 35,
- un champ 69 à la valeur 0 ou 1 pour indiquer respectivement que le traitement de formatage à appliquer est un formatage de type binaire ou booléen, et
- un bit parité 68 pour assurer au code de format une parité impaire.

Dans le cas d'un formatage de type booléen, le champ 71 du code de format fournit la position dans le message reçu 35 des bits à transformer en booléen, conformément aux valeurs VRAI et FAUX, fournies par les registres 27, 28.

Dans le cas d'un formatage de type binaire, le champ 71 du code de format 37 comprend, comme montré sur la figure 6b:
- un champ 66 donnant le nombre de bits à masquer en poids faible,
- un champ 65 donnant la valeur du masque 1 ou 0 à appliquer en poids faible,
- un champ 64 donnant la position du bit significatif de poids fort ou de signe dans le message reçu 35,
- un champ 63 indiquant le traitement des bits au-delà du bit de poids fort dont la position est définie par le champ 64, à savoir masquage à 0 ou 1, ou extension du signe, et
- un champ 62 contenant un code de cadrage définissant la position des bits du message reçu, éventuellement conservés dans le mot résultant du formatage.

Une fois que l'adresse du bloc 39 de stockage du message est calculée à l'étape 112, le séquenceur 11 lit la zone (77 figure 7) contenant le code de format 37 dans le bloc 39 en contrôlant la parité de ce-dernier (étape 114) et si cette parité n'est pas impaire le traitement n'est pas poursuivi. Dans le cas contraire, le séquenceur lit le champ 55 du descripteur 36 pour déterminer si un tri par SDI doit être effectué ou non, et si un tel tri doit être effectué, il lit également le champ 70 du code format qui indique si le code de format dépend ou non de la valeur du champ SDI 44 du message.
Suivant la valeur du champ 69 de ce code, le séquenceur 11 active ensuite le traitement de formatage de type booléen ou binaire (étape 115).

A l'étape 116 ou 126, si le champ 55 du descripteur 36 indique qu'un tri par SDI doit être effectué, le séquenceur calcule l'adresse où doit être à nouveau inscrit le message, cette adresse étant égale à l'adresse du bloc calculée précédemment, à laquelle on ajoute la valeur du champ SDI 44 multipliée par la taille du bloc (étape 117 ou 127). A l'étape 118 ou 128, le séquenceur 11 inscrit ensuite le message reçu dans un bloc de données 39, à la dernière adresse calculée, soit celle calculée à l'étape 112, soit celle calculée à l'étape 117 ou 127. Si le code format dépend de la valeur du champ SDI 44 du message, le séquenceur lit à nouveau la zone (77 figure 7) contenant le code format du bloc 39 où il vient d'écrire le message 35.

Si le champ 58 du descripteur 36 de message 35 indique qu'il faut dater le message, le séquenceur 11 calcule la date de péremption du message en ajoutant à la date courante sur 32 bits lue dans le registre 33, la valeur de la contrainte de rafraîchissement du dernier code de format lu 77, et inscrit cette date dans le champ date 76 du bloc de données 39 courant, c'est-à-dire, dans le bloc où le message reçu a été stocké pour la dernière fois (étape 119 ou 129).

Dans les deux traitements de formatage, si l'un des champs 51 à 54 du descripteur 36 du message vaut 1 et si le champ SSM 42 du message 35 présente une valeur qui ne correspond pas à celle définie par ces champs 51 à 54, le message est rejeté, c'est-à-dire que le traitement du message n'est pas poursuivi (étapes 120 ou 130).

Il est à noter qu'un message est inscrit dans le bloc de données de réception qui lui est associé et daté, même s'il est rejeté à cause de la valeur de son champ SSM 42, ce qui permet au processeur de traitement de vérifier que le message transmis à une cadence correcte, même s'il n'est pas valide.

Aux étapes 121 et 131, le séquenceur procède aux traitements de formatage des informations utiles 43 du message 35, telles que définies par le dernier code format 37 lu, et inscrit les données formatées dans le champ 78 du bloc de données 39 (étape 122 ou 132).

Le traitement de formatage booléen (étape 121) consiste à lire les bits du champ 43 du message reçu 35, indiqués par le champ 71 du dernier code de format lu, à les transformer respectivement en un booléen VRAI ou FAUX en fonction de leur valeur 1 ou 0, conformément aux valeurs stockées dans les registres 27, 28, et à inscrire la valeur résultante dans le champ données 78 du bloc de données courant (étape 122).
Dans ce cas, le champ de données 78 comprend avantageusement un mot de 32 bits par bit du message reçu 35, chaque mot de 32 bits correspondant respectivement à un bit du message reçu, et étant destiné à recevoir la valeur du booléen correspondant au bit de même rang dans le message reçu.

Le traitement de formatage binaire (étape 131) consiste tout d'abord à construire un mot de masquage de 32 bits dont les n bits de poids faible sont actifs, n étant fourni par le champ 66 du code de format 38, et à appliquer ce mot de masquage au message 35 de 32 bits, en remplaçant les positions marquées par le mot de masquage par la valeur du champ 65 du code de format. Ce traitement consiste ensuite à construire un mot de 64 bits comprenant en poids fort le résultat du masquage, et en poids faible un mot de 32 bits dont les bits sont égaux à la valeur de masquage fournie par le champ 65 du code de format 38. L'opération de formatage suivante consiste à construire un mot de 95 bits comprenant en poids faible le mot de 64 bits issu de l'opération précédente, dont les bits de poids fort, à partir du bit significatif indiqué par le champ 64 du code format 38, ont été forcés à la valeur indiquée par le champ 63 du code de format, à savoir 0, 1 ou la valeur du bit significatif, et en poids fort un mot constitué de 31 bits à la valeur indiquée par le champ 63 du code de format. Le traitement de formatage se termine par une opération qui consiste à sélectionner 32 bits consécutifs dans le mot de 95 bits ainsi constitué, conformément à la consigne de cadrage fournie par le champ 62 du code de formatage, la valeur de cette consigne indiquant la position du bit de poids faible du mot résultant, à prendre en compte dans le mot de 95 bits.

Ainsi, par exemple, si le champ 66 vaut 0, le champ 64 vaut 31 et le champ 62 vaut 32, le résultat du formatage correspond au message reçu. Si les champs 66 et 64 valent i-1 et le champ 62 vaut 32, la valeur résultante comprend tous ses bits à la valeur indiquée par le champ 63 sauf le bit i du message reçu 35. Si le champ 64 vaut i-1, le champ 62 vaut 63 et le champ 63 vaut 2 (extension du signe), le formatage est équivalent à une transformation du bit i du message reçu 35 en booléen (tous les bits du mot résultant sont à la valeur du bit i).

Comme pour les traitements "simple" et "trame", le séquenceur 11 génère également des interruptions dans la file d'attente d'interruptions 31, en fonction de la valeur des champs 47 et 49 du registre de contrôle 21 de la voie de réception du message, et 56 du descripteur 36 du message, et des erreurs détectées et des traitements effectués.

Il résulte de la description qui précède des traitements de formatage, et en particulier, du traitement de formatage binaire, que le procédé selon l'invention permet de définir d'une manière assez souple, des traitements relativement complexes.

## Revendications

1. Procédé pour la réception et le prétraitement de messages numériques, en vue de leur utilisation par un processeur de traitement (2) à qui les messages (35) sont destinés, chaque message comprenant des informations utiles (42, 43, 44) et une étiquette d'identification (45) de ces informations utiles permettant de calculer l'adresse, dans une mémoire (3), d'un descripteur (36) comprenant des informations relatives aux traitements à appliquer au message ainsi que des informations (60) définissant une adresse en mémoire d'une zone (39) de structure prédéfinie destinée au stockage du message considéré, ledit procédé comprenant, lors de la réception d'un message (35), la lecture de l'étiquette (45) du message reçu (81), le calcul (95) de l'adresse du descripteur obtenue à l'aide de l'étiquette (45), la lecture (96) en mémoire du descripteur (36) à l'adresse ainsi calculée, et l'exécution sur le message des traitements indiqués par le descripteur, et étant **caractérisé en ce que** ladite zone mémoire (39) adressée par un descripteur (36) renferme, en plus d'un emplacement destiné au message (75), un emplacement (77) pour un code de formatage ( 37) définissant un traitement de formatage (121, 131) à appliquer aux informations contenues dans le message (35) considéré pour les mettre sous une forme directement utilisable par le processeur de traitement.

2. Procédé selon la revendication 1, **caractérisé en ce que** des zones mémoire (39) à structure prédéfinie adressées par des descripteurs renferment des codes de formatage (37) correspondant à des traitements de formatage booléen consistant à convertir chacun des bits du message indiqués par le code de formatage (37) en une variable booléenne qui est stockée à la suite du message dans la zone mémoire (39) à structure prédéfinie.

3. Procédé selon la revendication 1, **caractérisé en ce que** des zones mémoire (39) à structure prédéfinie adressées par des descripteurs renferment des codes de formatage (37) correspondants à des traitements de formatage binaire consistant à masquer à certaines valeurs indiquées par le code de formatage (37) les bits de poids faible et fort à partir de rangs respectifs indiqués par le code de formatage (37) et à cadrer le mot ainsi obtenu à l'aide d'une information de cadrage également fournie par les codes de formatage (37).

4. Procédé selon la revendication 1,
**caractérisé en ce que** le code de formatage (37) comprend :
- un champ (67) donnant une valeur de contrainte de rafraîchissement à associer aux informations contenues dans le message (35) correspondant,
- un champ (69) indiquant le type de traitement de formatage, binaire ou booléen à appliquer,
- un champ (71) définissant les paramètres du formatage, et
- un bit parité (68) pour assurer au code de formatage une parité impaire, la parité du code de formatage étant contrôlée à chaque fois qu'il est lu (114), le traitement correspondant au code de formatage n'étant pas effectué si sa parité est incorrecte.

5. Procédé selon la revendication 1,
**caractérisé en ce que** le descripteur (36) d'un message (35) comprend un champ (55) indiquant s'il faut ou non stocker le message (35) à une adresse qui dépend d'une information (44) contenue dans le message, et **en ce que** le code de formatage (37) comprend un champ (70) précisant si le code de formatage dépend ou non de la valeur de cette information.

6. Procédé selon la revendication 1,
**caractérisé en ce que** chaque descripteur (36) de message (35) indique s'il faut ou non mémoriser la date de réception du message correspondant, le procédé selon l'invention comprenant le stockage (100, 106, 118, 128) du message à l'adresse indiquée par le descripteur, et si le descripteur l'indique, le stockage (102, 108, 119, 129) de la date de réception du message à la suite du message.

7. Procédé selon la revendication 1,
**caractérisé en ce que** le processeur de traitement (2) est relié à une pluralité de voies de transmission (17) de messages numériques (35), le procédé comprenant en outre l'association de chaque voie de transmission à un registre de contrôle de voie (21) indiquant l'adresse de la zone où se trouvent les descripteurs (36) des messages susceptibles d'être transmis par cette voie, ainsi que des paramètres généraux de définition des prétraitements à appliquer à ces messages, les registres de contrôle (21) de voie étant stockés en mémoire (13) à des adresses respectives prédéfinies, la réception d'un message par une voie déclenchant la lecture (82) du registre de contrôle de la voie, et le calcul (95) de l'adresse du descripteur du message à l'aide de l'étiquette (45) du message et de l'adresse (50) de la zone des descripteurs des messages, lue dans le registre de contrôle (21) de la voie.

8. Procédé selon selon la revendication 1,
**caractérisé en ce que** chaque descripteur (36) de message (35) comprend des informations de tri en fonction (51 à 54) du contenu du message, le procédé comprenant en outre le rejet (120, 130) d'un message reçu si le contenu du message correspond aux informations de tri contenues dans le descripteur qui lui est associé.

9. Dispositif pour la mise en oeuvre du procédé selon l'une des revendications précédentes,
**caractérisé en ce qu'**il comprend un automate séquenceur (11) avec :
- des moyens pour effectuer les opérations de réception et de stockage de messages (35) contenant des informations utiles (42, 43, 44) et une étiquette d'identification (45),
- des moyens de lecture des étiquettes (45) des messages reçus,
- des moyens pour calculer l'adresse d'un descripteur (36) obtenue à l'aide de l'étiquette du message reçu, le descripteur (36) comprenant des informations relatives aux traitements à appliquer aux messages,
- des moyens de formatage pour appliquer un traitement de formatage aux informations contenues dans les messages défini par un code de formatage renfermé dans une zone mémoire (39) adressée par le descripteur (36), le traitement de formatage étant considéré pour mettre les informations contenues dans les messages reçus sous une forme directement utilisable par le procésseur de traitement, et **en ce qu'**il comprend en outre
- une mémoire interne (13) accessible de l'extérieur où sont stockés les messages reçus (35) en attente de prétraitement et des paramètres généraux de définition des prétraitements, les descripteurs (36) des messages et les blocs de données (39) de stockage des messages étant situés dans une mémoire externe (3) accessible de l'automate séquenceur (11).

## Patentansprüche

1. Verfahren zum Empfang und zur Vorverarbeitung von digitalen Nachrichten in Hinblick auf ihre Nutzung durch einen Verarbeitungsprozessor (2), für den die Nachrichten (35) bestimmt sind, wobei jede Nachricht Nutzinformationen (42, 43, 44) und ein Identifizierungsetikett (45) für diese Nutzinformationen enthält, das die Adresse in einen Speicher (3) für einen Deskriptor (36) berechnen kann, der Informationen bezüglich der anzuwendenden Verarbeitungen der Nachricht sowie Informationen (60) enthält, die eine Adresse einer Speicherzone (39) einer vordefinierten Struktur definieren, in der die betreffende Nachricht gespeichert werden soll, wobei das Verfahren beim Empfang einer Nachricht (35) das Lesen (81) des Etiketts (45) der empfangenen Nachricht, die Berechnung (95) der Adresse des Deskriptors mithilfe des Etiketts (45), das Lesen (96) des Deskriptors (36) an der so berechneten Adresse des Speichers und die Durchführung der vom Deskriptor angegebenen Verarbeitungen der Nachricht enthält, **dadurch gekennzeichnet, daß** die vom Deskriptor (36) adressierte Speicherzone (39) außer einem Speicherplatz (75) für die Nachricht auch einen Platz (77) für einen Formatierungskode (37) enthält, der eine Formatierungsverarbeitung (121, 131) definiert, die auf die in der betreffenden Nachricht (35) enthaltenen Informationen anzuwenden ist, um sie in einem unmittelbar vom Verarbeitungsprozessor nutzbare Form zu bringen.

2. Verfahren nach Anspruch 1, **dadurch gekennzeichnet, daß** Speicherzonen (39) mit vordefinierter Struktur, die vom Deskriptor adressiert werden, Formatierungskodes (37) entsprechend Formatierungsverarbeitungen vom Boole-schen Typ enthalten, die darin bestehen, jedes der durch den Formatierungskode (37) bezeichneten Bits der Nachricht in eine Boole-sche Variable umzuwandeln, die im Anschluß an die Nachricht in der Speicherzone (39) vordefinierter Struktur gespeichert wird.

3. Verfahren nach Anspruch 1, **dadurch gekennzeichnet, daß** Speicherzonen (39) mit vordefinierter Struktur, die von Deskriptoren adressiert werden, Formatierungskodes (37) entsprechend Formatierungsverarbeitungen vom binären Typ enthalten, die darin bestehen, bei bestimmten Werten, die vom Formatierungskode (37) bezeichnet werden, die Bits geringer Wichtung und hoher Wichtung ausgehend von Rangangaben im Formatierungskode (37) zu maskieren und das so erhaltene Wort mithilfe einer Rahmeninformation zu umrahmen, die ebenfalls von den Formatierungskodes (37) geliefert wird.

4. Verfahren nach Anspruch 1, **dadurch gekennzeichnet, daß** der Formatierungskode (37) enthält:
- ein Feld (67), das einen Auffrischungswert für die in der entsprechenden Nachricht (35) enthaltenen Informationen liefert,
- ein Feld (69), das angibt, ob die anzuwendende Formatierungsverarbeitung vom binären oder Boole-schen Typ ist,
- ein Feld (71), das die Formatierungsparameter definiert,
- ein Paritätsbit (68), um dem Formatierungskode eine ungerade Parität zu verleihen, wobei die Parität des Formatierungskodes bei jedem Lesen (114) dieses Kodes überprüft wird und wobei die dem Formatierungskode entsprechende Verarbeitung nicht durchgeführt wird, wenn die Parität nicht stimmt.

5. Verfahren nach Anspruch 1, **dadurch gekennzeichnet, daß** der Deskriptor (36) einer Nachricht (35) ein Feld (55) enthält, das angibt, ob die Nachricht (35) an einer von einer in der Nachricht enthaltenen Information (44) abhängigen Adresse gespeichert werden soll oder nicht, und daß der Formatierungskode (37) ein Feld (70) enthält, das angibt, ob der Formatierungskode vom Wert dieser Information abhängt oder nicht.

6. Verfahren nach Anspruch 1, **dadurch gekennzeichnet, daß** der Deskriptor (36) einer Nachricht (35) angibt, ob das Datum des Empfangs der entsprechenden Nachricht gespeichert werden soll oder nicht, wobei das erfindungsgemäße Verfahren die Speicherung (100, 106, 118, 128) der Nachricht an der vom Deskriptor angegebenen Adresse und, wenn der Deskriptor dies angibt, die Speicherung (102, 108, 119, 129) des Empfangsdatums der Nachricht in Anschluß an die Nachricht enthält.

7. Verfahren nach Anspruch 1, **dadurch gekennzeichnet, daß** der Verarbeitungsprozessor (2) an eine Mehrzahl von Übertragungskanälen (17) für digitale Nachrichten (35) angeschlossen ist und das Verfahren außerdem die Zuordnung jedes Übertragungskanals zu einem Kanal-Überwachungsregister (21), das die Adresse der Zone angibt, in der sich die Deskriptoren (36) der Nachrichten befinden, die von diesem Kanal übertragen werden könnten, sowie allgemeine Parameter zur Definition der Vorverarbeitungen, denen diese Nachrichten zu unterwerfen sind, wobei die Überwachungsregister (21) der Kanäle in einem Speicher (13) an jeweilig vordefinierten Adressen gespeichert sind und der Empfang einer Nachricht über einen Kanal das Lesen (82) des Kanal-Überwachungsregisters auslöst, und die Berechnung (95) der Adresse des Deskriptors der Nachricht mithilfe des Etiketts (45) der Nachricht und der aus dem Überwachungsregister (21) des Kanals gelesenen Adresse (50) der Zone der Deskriptoren der Nachrichten enthält.

8. Verfahren nach Anspruch 1, **dadurch gekennzeichnet, daß** jeder Deskriptor (36) einer Nachricht (35) Informationen zur Aussonderung abhängig vom Inhalt der Nachricht (51 bis 54) enthält, wobei das Verfahren außerdem die Abweisung (120, 130) einer empfangenen Nachricht aufweist, wenn der Inhalt der Nachricht Aussonderungsinformationen entspricht, die im zugeordneten Deskriptor enthalten sind.

9. Vorrichtung zur Durchführung des Verfahrens nach einem der vorstehenden Ansprüche, **dadurch gekennzeichnet, daß** sie einen Folgeschaltungsautomat (11) aufweist
- mit Mitteln, um Operationen zum Empfang und zur Speicherung von Nachrichten (35) durchzuführen, die Nutzinformationen (42, 43, 49) und ein Identifizierungsetikett (45) aufweisen,
- mit Mitteln zum Lesen der Etikette (45) der empfangenen Nachrichten,
- mit Mitteln zur Berechnung der Adresse eines Deskriptors (36) mithilfe des Etiketts der empfangenen Nachricht, wobei der Deskriptor (36) Informationen bezüglich der Verarbeitungen enthält, denen die Nachrichten zu unterziehen sind,
- mit Formatierungsmitteln, um eine Formatierungsverarbeitung auf die in den Nachrichten enthaltenen Informationen anzuwenden, wobei diese Verarbeitung durch einen Formatierungskode definiert wird, der in einer vom Deskriptor (36) adressierten Speicherzone (39) enthalten ist, und die Formatierung das Ziel hat, die in den empfangenen Nachrichten empfangenen Informationen in eine unmittelbar für den Verarbeitungsprozessor brauchbare Form zu bringen, und daß die Vorrichtung weiter aufweist
- einen internen Speicher (13), der von außen zugänglich ist und in dem die empfangenen Nachrichten (35) in Erwartung der Vorverarbeitung und der allgemeinen Parameter zur Definition der Vorverarbeitungen gespeichert sind, wobei die Deskriptoren (36) der Nachrichten und die Datenblöcke (39) zur Speicherung in einem äußeren vom Folgeschaltungsautomat (11) erreichbaren Speicher (3) liegen.

## Claims

1. Method for the reception and preprocessing of digital messages, with a view to their use by a handling processor (2) for which the messages (35) are intended, each message comprising useful information items (42, 43, 44) and a tag (45) identifying these useful information items making it possible to calculate the address, in a memory (3) of a descriptor (36) comprising information items relating to the processing operations to be applied to the message as well as information items (60) defining an address in memory of an area (39) with predefined structure intended for the storage of the relevant message, the method comprising, upon reception of a message (35), the reading of the tag (45) of the message received (81), the calculation (95) of the descriptor's address obtained with the aid of the tag (45), the reading (96) in the memory of the descriptor (36) at the address thus calculated, and the running on the message of the processing operations indicated by the descriptor, and being **characterized in that** the said memory area (39) addressed by a descriptor (36) encloses, in addition to a location intended for the message (75), a location (77) for a formatting code (37) defining a formatting processing operation (121, 131) to be applied to the information items contained in the relevant message (35) so as to place them in a form directly usable by the handling processor.

2. Method according to Claim 1, **characterized in that** memory areas (39) with predefined structure which are addressed by descriptors enclosing formatting codes (37) corresponding to boolean formatting processing operations consisting in converting each of the message bits indicated by the formatting code (37) into a boolean variable which is stored subsequent to the message in the memory area (39) with predefined structure.

3. Method according to Claim 1, **characterized in that** memory areas (39) with predefined structure which are addressed by descriptors enclosing formatting codes (37) corresponding to binary formatting processing operations consisting in masking, to certain values indicated by the formatting code (37), the low-significance and high-significance bits on the basis of respective ranks indicated by the formatting code (37), and in framing the word thus obtained with the aid of a framing information item also provided by the formatting code (37).

4. Method according to Claim 1, **characterized in that** the formatting code (37) comprises:
- a field (67) giving a refresh constraint value to be associated with the information items contained in the corresponding message (35),
- a field (69) indicating the type of formatting operation, binary or boolean, to be applied,
- a field (71) defining the formatting parameters, and
- a parity bit (68) for giving the formatting code an odd parity, the parity of the formatting code being checked each time it is read (114), the processing corresponding to the formatting code not being carried out if its parity is incorrect.

5. Method according to Claim 1, **characterized in that** the descriptor (36) of a message (35) comprises a field (55) indicating whether or not it is necessary to store the message (35) at an address which depends on an information item (44) contained in the message, and **in that** the formatting code (37) comprises a field (70) specifying whether or not the formatting code depends on the value of this information item.

6. Method according to Claim 1, **characterized in that** each descriptor (36) of a message (35) indicates whether or not it is necessary to save the reception date of the corresponding message, the method according to the invention comprising the storage (100, 106, 118, 128) of the message at the address indicated by the descriptor, and if the descriptor so indicates, the storage (102, 108, 119, 129) of the reception date of the message following the message.

7. Method according to Claim 1, **characterized in that** the handling processor (2) is connected to a plurality of channels (17) for transmitting digital messages (35), the method furthermore comprising the association of each transmission channel with a channel control register (21) indicating the address of the area containing the descriptors (36) of the messages capable of being transmitted by this channel, as well as general parameters defining the preprocessing operations to be applied to these messages, the channel control registers (21) being stored in memory (13) at predefined respective addresses, the reception of a message by a channel triggering the reading (82) of the control register of the channel, and the calculation (95) of the address of the descriptor of the message with the aid of the tag (45) of the message and the address (50) of the area with the descriptors of the messages, which is read from the control register (21) of the channel.

8. Method according to Claim 1, **characterized in that** each descriptor (36) of a message (35) comprises information items for sorting as a function (51 to 54) of the content of the message, the method furthermore comprising the rejection (120, 130) of a received message if the content of the message corresponds to the sorting information items contained in the descriptor which is associated with it.

9. Device for implementing the method according to one of the preceding claims,
**characterized in that** it comprises a sequencer machine (11) with:
- means for performing the operations of reception and storage of messages (35) containing useful information items (42, 43, 44) and an identifying tag (45),
- means for reading the tags (45) of the messages received,
- means for calculating a descriptor (36) address obtained with the aid of the tag of the message received, the descriptor (36) comprising information items relating to the processing operations to be applied to the messages,
- formatting means for applying a formatting operation to the information items contained in the messages, which operation is defined by a formatting code enclosed in a memory area (39) addressed by the descriptor (36), the formatting operation being relevant for placing the information items contained in the messages received into a form directly useable by the handling processor, and **in that** it furthermore comprises
- an internal memory (13) accessible from outside wherein are stored the messages received (35) and awaiting preprocessing and general parameters for defining the preprocessing operations, the descriptors (36) of the messages and the data blocks (39) for storing the messages being situated in an external memory (3) accessible from the sequencer machine (11).
